# EUROPEAN PATENT APPLICATION

(11) **EP 1 335 610 A1**
(43) Date of publication of application: **13.08.2003**
(21) Application number: 02002040.0
(22) Date of filing: 07.02.2002
(51) Int. Cl.: H04N 9/04

(54) **Method and apparatus for obtaining an accurate digital color image**

(71) Applicant: WayTech Development, Inc., Hsinchu (TW)
(72) Inventor: Lai, Peng-Cheng, Banchiau City, Taipei County 220 (TW); Wang, Douglas W., East District, Hsinchu (TW); Chen, Wei-Shang, Taichung City (TW); Keh, Shou-Liang, Taipei City (TW); Chang, Yu-Chang, Hsinchu City (TW)
(74) Representative: Casalonga, Axel

(57) **Abstract**

A method and apparatus to obtain a substantially accurate digital color image of a subject at relatively low cost. A moveable enclosure containing a controlled lighting source provides a controlled lighting environment that costs considerably less than a traditional photo studio and is more convenient to use for many applications. A digital color image capture device captures an image of a subject in the enclosure. The captured image is sent to a computer where a stored color profile previously obtained from a calibration of the digital image capture device is used by a software program to automatically correct the color of the captured image. The color-corrected image can then be distributed to other computers for display.

## Description

### Field of the invention

The present invention relates to a method and apparatus which substantially lowers the cost of obtaining accurate digital color images while improving color accuracy.

### Background of the invention

In recent years, as Internet usage has become more widespread, interest in selling products over the Internet has grown rapidly. The potential business opportunities are numerous and are widely acknowledged to total many billions of dollars. For many of these business opportunities, a key barrier to success is the vendor's ability to show accurate color images of its products to potential purchasers over the Internet. Many potential purchasers won't buy a product if they're not sure what color it will be. For example, women today often refuse to buy scarves over the Internet: they realize that even if the colors of images on their computer monitors work well with some of their ensembles, the colors of the actual scarves they will receive will be somewhat different and may not be a good match.

The problem of color inaccuracy in electronic images has been the target of considerable technology development efforts in recent years. Much of this work has focused on the problem of color distortions caused by computer displays. Several display-distortion correction techniques have been developed to solve this problem, and are now known to those skilled in the art. These techniques generally assume that one starts with an accurate color image. Therefore, they do not solve the problem of how to obtain an accurate color image of an object in the first place.

Today, capturing an accurate color image of an object is costly. The object must be taken to a specially equipped environment where the lighting can be carefully controlled. Uncontrolled sources of light must be blocked so that they do not change the colors. Usually this is done in a special room or booth dedicated to such work, such as a photo studio. Equipping, maintaining and staffing such a space is costly. And, since it is expensive, the space tends to be shared by a number of users and is located some distance away from the offices of many of them. This wastes the time of marketing and artistic staff, who are often highly compensated and are a scarce resource in most firms.

Lighting control is not the only problem in capturing accurate color images. Color distortion by digital cameras and other electronic image capture devices is also a source of color inaccuracy. Although the color accuracy of such devices has significantly greatly improved in recent years, it is often still not good enough to meet the needs of many Internet vendors.

It is an object of the present invention to provide a method and apparatus which substantially lowers the cost of obtaining accurate color images while improving color accuracy.

### Brief summary of the invention

The present invention comprises a method and apparatus which substantially lowers the cost of obtaining accurate digital color images while improving color accuracy.

The method includes the step of controlling the lighting in the environment within which digital color images are captured. For this purpose the apparatus includes a moveable enclosure with a plurality of controllable lighting sources. This serves both to eliminate uncontrolled sources of light, and to provide controllable illumination that can be adjusted to provide appropriate lighting for capturing digital color images of each subject. Such an enclosure can be manufactured in volume at a unit cost considerably less than that of a photo studio. The relatively small size and moveability of the enclosure allows it to be moved to the optimal location for each project for marketing and artistic staff to work with it. This eliminates the time these highly compensated and relatively scarce resources waste repeatedly travelling to/from a fixed-location photo studio away from their offices. The relatively low cost of the enclosure is also a significant advantage. Small firms which currently have to rent time at a third-party photo studio will be able to save money by buying one of these enclosures instead. Large firms will find it cost effective to purchase several such enclosures, enabling their staff to do several projects in parallel instead of queuing for a shared central photo studio.

The apparatus includes a digital color image capture means to capture digital color images within the controlled-lighting environment. The digital color image capture means can be selected from a wide variety of digital color image capture devices, including digital cameras, PC cameras, charge-coupled devices, etc. The invention enables color accurate images to be obtained with digital color image capture means that cost significantly less than the expensive cameras currently used in photo studios, because of the effectiveness of the color correction step that is part of the invention.

The apparatus includes a color correction specification means which specifies how the color of images captured by a particular digital color image capture means should be adjusted for accuracy. In the color correction step of the invention, this color correction specification means is input into a color correction means which adjusts the color of each image captured by the corresponding digital color image capture means so that the resulting image color is substantially accurate.

The method includes the step of calibrating a digital color image capture means to produce a corresponding color correction specification means. In this step, a color palette means consisting of a plurality of objects which have a plurality of known colors is placed in the controlled-lighting environment. The digital color image capture means being calibrated is used to capture a plurality of imperfectly-colored images of the color palette means. These imperfectly-colored images of the color palette means are then compared to a set of color-accurate reference images of the color palette means, and the differences are used to compute the resulting color correction specification means. Note that the calibration step can be done as part of manufacturing the apparatus in a volume production facility. This means that it can be done at a substantially lower cost than would be required to send an expert technician to each customer's site. Note also, should the owner of the enclosure wish to replace the digital color image capture means, (because the device breaks down, because a more advanced model becomes available, or for any other reason) a new color correction specification means can be prepared at a reasonable cost.

The method includes the step of storing the corrected color images on an image storage device, such as a server computer that provides images of objects in response to requests over the Internet.

The method includes the step of displaying the corrected color images on a computer monitor with substantially the same colors as the original subject. For example, this computer monitor may be a computer monitor attached to a PC of a potential object purchaser who is connected via the Internet to the aforementioned server computer. Or, for another example, this computer monitor may be attached to a PC connected to the digital color image capture means and used (after the color correction step) by the marketing and artistic staff to evaluate candidate images and select the most effective ones.

### Brief description of the drawings

FIG. 1 illustrates the architecture of the preferred embodiment, illustrating front-end 10 for image capture and image distribution, and back-end 12 for image display.
FIG. 2. illustrates the arrangement of controlled lighting source 22, digital image capture device 24, and example subject 20 within moveable enclosure 14 of the apparatus of the preferred embodiment
FIG. 3 illustrates two methods of calibrating a monitor so that it can be used to display substantially accurate color images.
FIG. 4 illustrates a method of calibrating a monitor so that it can be used to display substantially accurate color images.
FIG 5 illustrates a method of calibrating a digital color image capture device to produce a color profile.

### Detailed description of the preferred embodiment

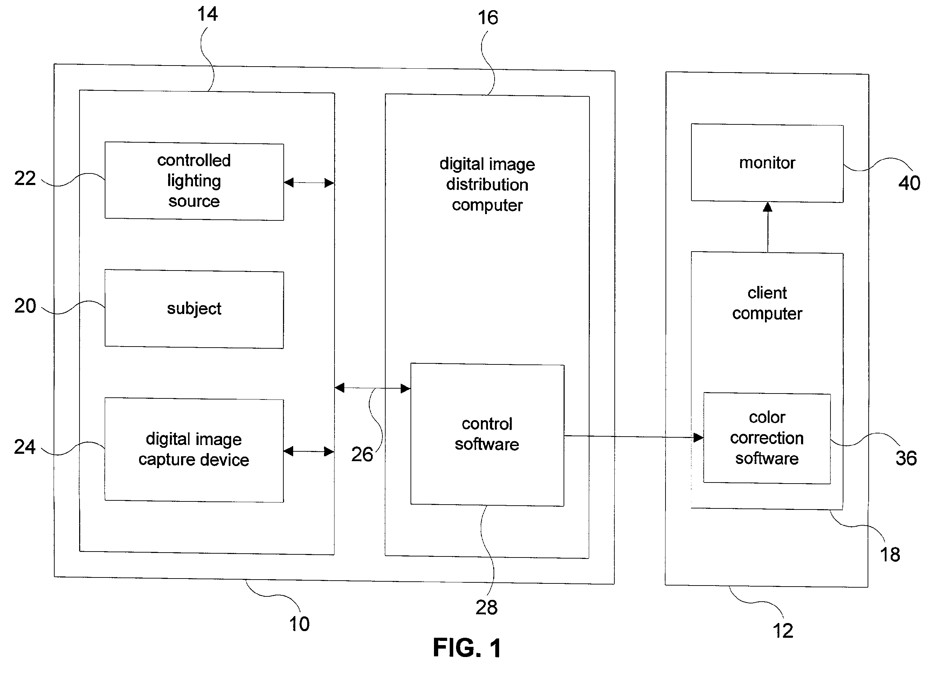

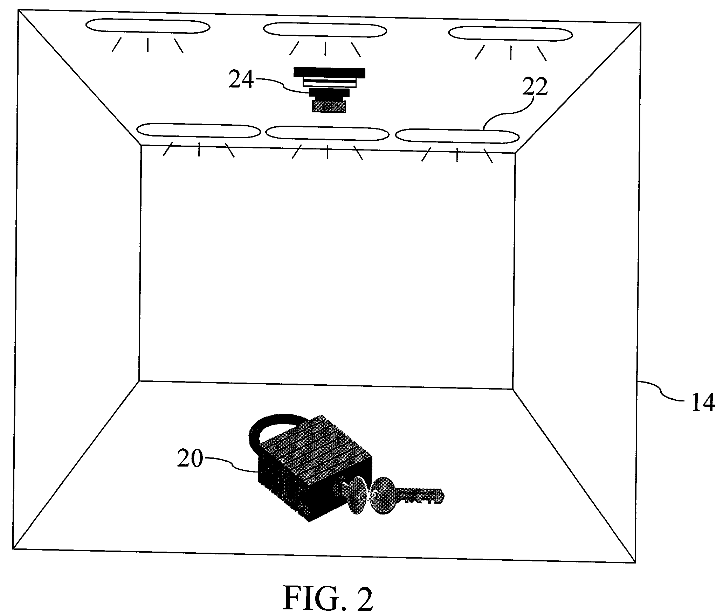

In FIG. 1, the architecture of an exemplary preferred embodiment of the invention is illustrated. An enclosure 14 comprising a box constructed of rigid, lightweight opaque material encloses a digital image capture environment and substantially prevents the entry of light from external light sources. A plurality of objects which are to be imaged, hereinafter referred to as subject 20, is placed inside enclosure 14. A controlled lighting source 22 comprising six lamps is attached to the inside of enclosure 14. Also attached to the inside of enclosure 14 is a digital color image capture device 24 comprising a digital camera. In FIG. 2, the preferred embodiment's arrangement of controlled lighting source 22, digital color image capture device 24 and an example subject 20 inside enclosure 14 is illustrated.

Controlled lighting source 22 is constructed of readily available light-source tubes and fixtures selected and wired so that together they produce a color temperature of approximately 6500 degrees Kelvin and a light intensity between 200 candelas per square meter and 300 candelas per square meter. Techniques to construct such a controlled lighting source are well known to those skilled in the art.

Digital color image capture device 24 is attached to digital image distribution computer 16 by USB connection 26. When digital color image capture device 24 captures an image, the image is sent over USB connection 26 to digital image distribution computer 16. A color correction software program running on digital image distribution computer 16 within control software 28 automatically corrects the color of the image using a color profile obtained from a calibration of digital color image capture device 24 as described below. The color-corrected version of the image is then stored on digital image distribution computer 16 for use as described below. Note: automatable techniques for color correction of digital color images are well known to those skilled in the art. Such techniques can readily be encoded by those skilled in the art into software programs to automatically correct the color of digital color images.

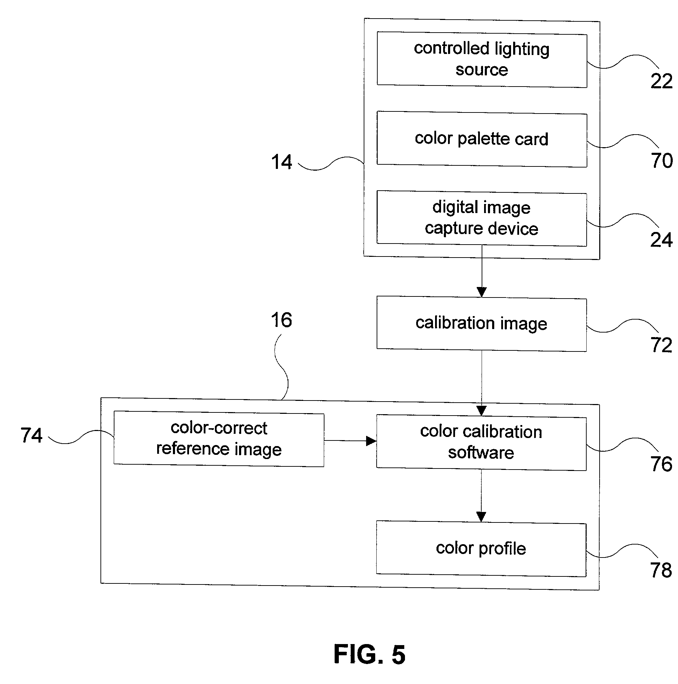

Digital color image capture device 24 is calibrated as shown in FIG. 5 to produce a color profile that is used for color correction as described in the previous paragraph. In the first step in the calibration process, color palette card 70 is placed into enclosure 14 in the location where subject 20 usually is placed. Color palette card 70 is a card that contains several colored rectangles on a white background. Each colored rectangle contains one known color. Each colored rectangle contains a different color so that a wide variety of colors in the visual spectrum are represented. Color palette cards are well known to those skilled in the art. In the second step in the calibration process, calibration image 72 of color palette card 70 is captured using digital color image capture device 24. In the third step in the calibration process calibration image 72 of color palette card 70 is sent to digital image distribution computer 16 over USB connection 26. In the fourth step of the calibration process, color calibration software program 76 running on digital image distribution computer 16 compares calibration image 72 of color palette card 70 to color-correct reference image 74 of color palette card 70 that was previously prepared and stored in digital image distribution computer 16. Techniques to prepare a color-correct reference image of a color palette card are well known to those skilled in the art. In the fifth step of the calibration process, color calibration software program 76 uses the color differences between the two images to compute color profile 78 and store it on digital image distribution computer 16 so that it can be used for color correction as described in the previous paragraph. Note: automatable techniques to compare a calibration digital color image to a reference digital color image and to use the color differences between the two images to compute a color profile are well known to those skilled in the art. Such techniques can readily be encoded by those skilled in the art into software programs which automatically compare a calibration digital color image to a reference digital color image and use the color differences between the two images to compute a color profile.

After a color-corrected image is stored on digital image distribution computer 16, it can be requested from client computer 18 which is connected to digital image distribution computer 16 over a network. After client computer 18 receives the color-corrected image, it can be displayed on an image display means comprising monitor 40 which is attached to client computer 18.

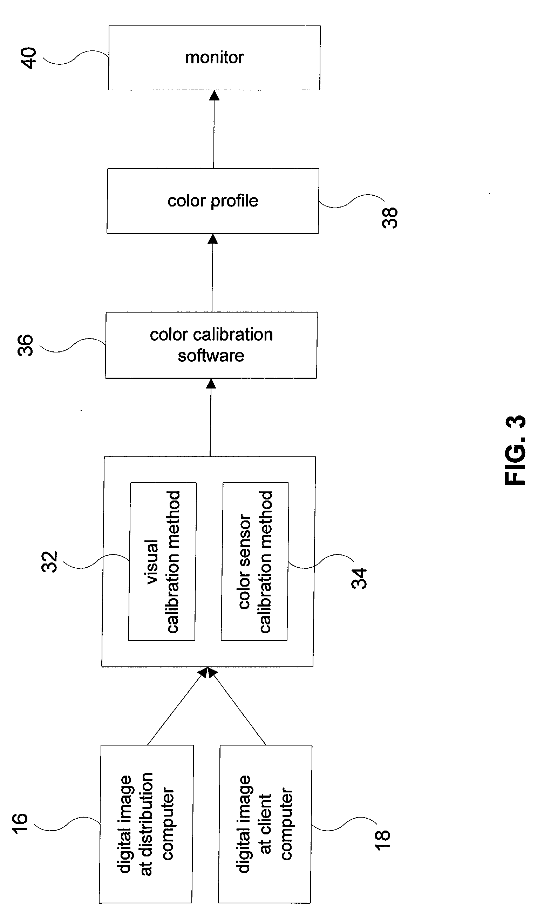

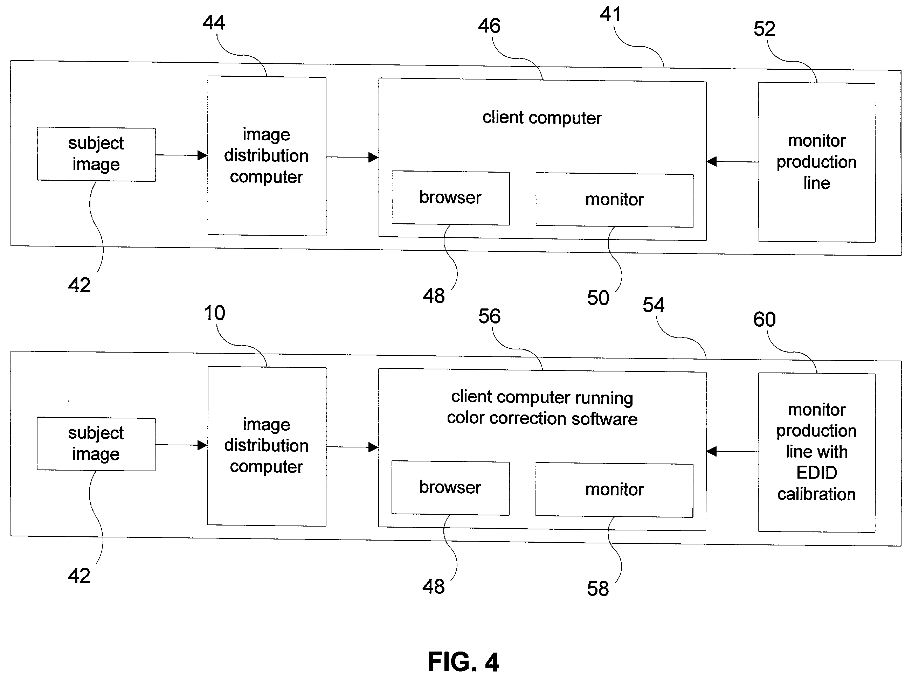

It is well known to those skilled in the art that the display electronics in monitors cannot display images with correct colors without some form of color correction assistance. Those skilled in the art are familiar with several methods for providing such color correction assistance. In the preferred embodiment, the Extended Display Identification Data (EDID) method is used as illustrated in FIG. 4. In this method, the color display characteristics of the display electronics in monitor 50 are measured during manufacturing on production line 52. These measurements are used to generate a set of EDID parameters, which is stored is stored inside monitor 50. Subsequently, after manufacturing, when an image is to be displayed on monitor 50, a software program running on client computer 46 reads the EDID parameters from monitor 50 and uses those parameters to inversely modify the color of the image so that after the inversely modified image is modified by passing through the display electronics it is displayed with the correct colors. Two alternative methods providing color correction assistance for the display electronics in monitors that are known to those skilled in the art are shown in FIG 3: visual calibration method 32 and color sensor calibration method 34.

While the above description contains many specifics, these should not be construed as limitations on the scope of the invention, but rather as an exemplification of one preferred embodiment thereof. Many other variations are possible.

For example, enclosure 14 may be constructed of rigid opaque plastic panels, rigid wood panels, rigid metal panels, or rigid opaque panels made of other materials.

For example, enclosure 14 may comprise a rigid frame made of plastic, wood, metal or other rigid material to give the enclosure shape and a means for attaching and positioning a lighting source, a digital color image capture device and a subject, with the frame being covered by opaque fabric, opaque plastic sheeting or other opaque materials.

For example, enclosure 14 could be made moveable by constructing it of lightweight materials, by mounting it on wheels, by attaching a plurality of handles, by constructing it so that it can be readily disassembled into a moveable state and then readily reassembled into a usable state, or by any other technique for achieving moveability.

For example, subject 20 may be located within enclosure 14 at various positions, and placed on a position-adjustment device such as a stand which raises, lowers, tilts, rotates or otherwise modifies the position of subject 20 as desired by the user of the apparatus.

For example, controlled lighting source 22 may comprise various numbers of lamps arranged in various adjustable patterns around the inside of enclosure 14. For example, controlled lighting source 22 may further comprise diffusively reflective fabric or other diffusively reflective means on the inside of enclosure 14 to improve the distribution of light over subject 20.

For example, controlled lighting source 22 could provide a plurality of discrete alternative color temperatures which the user could select from using a dial on enclosure 14 or any other control mechanism.

For example, controlled lighting source 22 could provide a continuous range of alternative color temperatures which the user could select from using a dial on enclosure 14 or any other control mechanism.

For example, an approximation of the current color temperature inside enclosure 14 could be sent to digital image distribution computer 16 for display to the user of the apparatus.

For example, the color temperature desired by the user of the apparatus could be achieved and maintained by a closed-loop control system including a color temperature sensor.

For example, the color temperature could be viewed from a computer user interface, from a wireless remote control hardware device, or from any other display mechanism that can be configured to receive status data from enclosure 14.

For example, the color temperature could be controllable from a computer user interface, from a wireless remote control hardware device, from a dial on enclosure 14, or by any other control mechanism.

For example, the light intensity could be controllable independently of color temperature.

For example, controlled lighting source 22 could provide a plurality of discrete alternative color intensities which the user could select from using a dial on enclosure 14 or any other control mechanism.

For example, controlled lighting source 22 could provide a continuous range of alternative color intensities which the user could select from using a dial on enclosure 14 or any other control mechanism.

For example, an approximation of the current light intensity inside enclosure 14 could be sent to digital image distribution computer 16 for display to the user of the apparatus.

For example, the light intensity desired by the user of the apparatus could be achieved and maintained by a closed-loop control system including a light intensity sensor.

For example, the light intensity could be viewed from a computer user interface, from a wireless remote control hardware device, or from any other display mechanism that can be configured to receive status data from enclosure 14.

For example, the light intensity could be controllable from a computer user interface, from a wireless remote control hardware device, from a dial on enclosure 14, or by any other control mechanism.

For example, digital color image capture device 24 could be a digital camera, charge-coupled device, PC camera, or any other digital color image capture means.

For example, digital color image capture device 24 could send images to and receive control messages from digital image distribution computer 16 by USB 1.0, USB 2.0, IEEE 1394, Bluetooth, or any other communication means capable of reliably transmitting image data with an acceptable transmission rate.

For example, digital image distribution computer 16 could be replaced by two computers: (a) a front-end computer for receiving images from digital color image capture device 24, then correcting the color of the images, then reviewing and culling the images, then applying well-known tools such as Adobe Photoshop to further process and enhance the desired images, and (b) a back-end computer for storing finished images for distribution over the Internet as needed.

For example, the color palette used in the preferred embodiment's calibration process could be replaced by any set of objects with known colors for which a correct-color reference image is available or could be prepared.

While this invention has been described in reference to illustrative embodiments, this description is not intended to be construed in a limiting sense. Various modifications and combinations of the illustrative embodiments, as well as other embodiment of the invention, will be apparent to persons skilled in the art upon reference to the description. The teachings and concepts of the present invention may be applied to other types of components, systems and structures - the principles of the present invention are practicable in a number of applications and technologies. It is therefore intended that the appended claims encompass any such modifications or embodiments.

## Claims

1. An apparatus for capturing a plurality of digital color images under controlled lighting conditions, comprising:
**(a)** a moveable enclosure means which substantially encloses an environment within which said plurality of digital color images are captured and which enables the lighting conditions in said environment to be substantially controlled,
**(b)** a controlled lighting means comprising a plurality of light sources which can be controlled to produce appropriate lighting conditions within said moveable enclosure means, and
**(c)** a digital color image capture means which captures said plurality of digital color images from within said moveable enclosure means.

2. The apparatus for capturing a plurality of digital color images under controlled lighting conditions of Claim 1, wherein said digital color image capture means is selected from the group consisting of digital cameras, charge-coupled devices, and PC cameras.

3. A method of capturing a plurality of digital color images under controlled lighting conditions, comprising:
**(a)** substantially enclosing the environment within which said plurality of digital color images are captured using a moveable enclosure means which substantially encloses said environment, thereby enabling the lighting conditions in said environment to be substantially controlled,
**(b)** providing appropriate lighting conditions within said moveable enclosure means using a controlled lighting means comprising a plurality of light sources which can be controlled to produce said appropriate lighting conditions, and
**(c)** capturing said plurality of digital color images from within said moveable enclosure means using a digital color image capture means.

4. The method of capturing a plurality of digital color images under controlled lighting conditions of Claim 3, wherein said digital color image capture means is selected from the group consisting of digital cameras, charge-coupled devices, and PC cameras.

5. An apparatus for capturing a plurality of appropriately colored digital color images, comprising:
**(a)** a moveable lighting control enclosure means which substantially encloses an environment within which digital color images are captured and which controls the lighting in said environment,
**(b)** a digital color image capture means which captures imperfectly colored digital color images,
**(c)** a color correction specification means which specifies how the color of said imperfectly colored digital color images should be corrected, and
**(d)** a color correction means which uses said color correction specification means to correct the color of said imperfectly colored digital color images to produce appropriately colored digital color images.

6. The apparatus for capturing a plurality of appropriately colored digital color images of Claim 5, wherein said digital color image capture means is selected from the group consisting of digital cameras, charge-coupled devices, and PC cameras.

7. The apparatus for capturing a plurality of appropriately colored digital color images of Claim 5, further including a calibration means which calibrates said digital color image capture means and produces said color correction specification means.

8. The apparatus for capturing a plurality of appropriately colored digital color images of Claim 7, wherein said calibration means comprises at least a color palette means comprising a plurality of objects which have a plurality of known colors, and a color correction computation means which computes said color correction specification means from a plurality of imperfectly colored digital color images of said color palette means captured by said digital color image capture means.

9. A method of capturing a plurality of appropriately colored digital color images, comprising the following steps:
**(a)** controlling the lighting in the environment within which digital color images are captured using a moveable lighting control enclosure means which substantially encloses an environment within which digital color images are captured and which controls the lighting in said environment,
**(b)** capturing a plurality of imperfectly colored digital color images using a digital color image capture means, and
**(c)** correcting the color of said imperfectly colored digital color images using a color correction means which uses a color correction specification means.

10. The method of capturing a plurality of appropriately colored digital color images of Claim 9 wherein said digital color image capture means is selected from the group consisting of digital cameras, charge-coupled devices, and PC cameras.

11. The method of capturing a plurality of appropriately colored digital color images of Claim 9, further including the step of calibrating said digital color image capture means to produce said color correction specification means before said moveable lighting control enclosure means and said digital color image capture means are delivered to the end user.

12. The method of capturing a plurality of appropriately colored digital color images of Claim 9, further including the step of calibrating said digital color image capture means produce said color correction specification means whenever a new calibration is desired.

13. The method of capturing a plurality of appropriately colored digital color images of Claim 11, wherein the step of calibrating said digital color image capture means comprises at least the steps of using said digital color image capture means to capture a plurality of imperfectly colored digital color images of a color palette means comprising a plurality of objects which have a plurality of known colors, and of computing a color correction specification means using said imperfectly colored digital color images of said color palette means.

14. The method of capturing a plurality of appropriately colored digital color images of Claim 12, wherein the step of calibrating said digital color image capture means comprises at least the steps of using said digital color image capture means to capture a plurality of imperfectly colored digital color images of a color palette means comprising a plurality of objects which have a plurality of known colors, and of computing a color correction specification means using said imperfectly colored digital color images of said color palette means.

15. An apparatus for providing a plurality of appropriately colored digital color images of a plurality of objects, comprising:
**(a)** a moveable lighting control enclosure means which substantially encloses an environment within which digital color images are captured and which controls the lighting in said environment,
**(b)** a digital color image capture means which captures imperfectly colored digital color images of said objects,
**(c)** a color correction specification means which specifies how the color of said imperfectly colored digital color images should be corrected,
**(d)** a color correction means which uses said color correction specification means to correct the color of said imperfectly colored digital color images to produce appropriately colored digital color images,
**(e)** an image storage means which stores said appropriately colored digital images, and
**(f)** an image display means which displays said appropriately colored digital images with substantially the same colors as said objects.

16. The apparatus for providing a plurality of appropriately colored digital color images of a plurality of objects of Claim 15, wherein said image storage means is a data server device such as a server computer, and wherein said image display means is a color-calibrated monitor which may be attached directly to the server computer or to another computer which can obtain data from said data server device.

17. The apparatus for providing a plurality of appropriately colored digital color images of a plurality of objects of Claim 16, wherein said digital color image capture means is selected from the group consisting of digital cameras, charge-coupled devices, and PC cameras.

18. The apparatus for providing a plurality of appropriately colored digital color images of a plurality of objects of Claim 16, further including a calibration means which calibrates said digital color image capture means and produces said color correction specification means.

19. The apparatus for providing a plurality of appropriately colored digital color images of a plurality of objects of Claim 18, wherein said calibration means comprises at least a color palette means comprising a plurality of objects which have a plurality of known colors, and a color correction computation means which computes said color correction specification means from a plurality of digital color images of said color palette means captured by said digital color image capture means.

20. A method for providing a plurality of appropriately colored digital color images of a plurality of objects, comprising the following steps:
**(a)** controlling the lighting in the environment within which digital color images are captured using a moveable lighting control enclosure means which substantially encloses an environment within which digital color images are captured and which controls the lighting in said environment,
**(b)** capturing a plurality of imperfectly colored digital color images of said objects using a digital color image capture means,
**(c)** correcting the color of said imperfectly colored digital color images to produce appropriately colored digital color images using a color correction means which uses a color correction specification means,
**(d)** storing said appropriately colored digital color images on an image storage means, and
**(e)** displaying said appropriately colored digital color images on an image display means with substantially the same colors as said objects.

21. The method for providing a plurality of appropriately colored digital color images of a plurality of objects of Claim 20, wherein said image storage means is a data server device such as a server computer, and wherein said image display means is a color-calibrated monitor which may be attached directly to the server computer or to another computer which can obtain data from said data server device.

22. The method for providing a plurality of appropriately colored digital color images of a plurality of objects of Claim 21 wherein said digital color image capture means is selected from the group consisting of digital cameras, charge-coupled devices, and PC cameras.

23. The method for providing a plurality of appropriately colored digital color images of a plurality of objects of Claim 21, further including the step of calibrating said digital color image capture means to produce said color correction specification means before said moveable lighting control enclosure means and said digital color image capture means are delivered to the end user.

24. The method for providing a plurality of appropriately colored digital color images of a plurality of objects of Claim 21, further including the step of calibrating said digital color image capture means produce said color correction specification means whenever a new calibration is desired.

25. The method for providing a plurality of appropriately colored digital color images of a plurality of objects of Claim 23, wherein the step of calibrating said digital color image capture means comprises at least the steps of using said digital color image capture means to capture a plurality of imperfectly colored digital color images of a color palette means comprising a plurality of objects which have a plurality of known colors, and of computing a color correction specification means using said imperfectly colored digital color images of said color palette means.

26. The method for providing a plurality of appropriately colored digital color images of a plurality of objects of Claim 24, wherein the step of calibrating said digital color image capture means comprises at least the steps of using said digital color image capture means to capture a plurality of imperfectly colored digital color images of a color palette means comprising a plurality of objects which have a plurality of known colors, and of computing a color correction specification means using said imperfectly colored digital color images of said color palette means.
